Europäisches Patentamt

European Patent Office

Office européen des brevets

(19)

(11) Veröffentlichungsnummer: **0 228 000**
**B1**

(12) ## EUROPÄISCHE PATENTSCHRIFT

(45) Veröffentlichungstag der Patentschrift: **08.08.90**

(21) Anmeldenummer: **86117274.0**

(22) Anmeldetag: **11.12.86**

(51) Int. Cl.⁵: **A 47 J 31/54**, **F 24 H 1/14**, **H 05 B 3/50**

(54) **Elektrischer Durchlauferhitzer.**

(30) Priorität: **23.12.85 DE 8536338 u**

(43) Veröffentlichungstag der Anmeldung:
**08.07.87 Patentblatt 87/28**

(45) Bekanntmachung des Hinweises auf die
Patenterteilung:
**08.08.90 Patentblatt 90/32**

(84) Benannte Vertragsstaaten:
**DE FR IT**

(56) Entgegenhaltungen:
**DE-A-2 555 599**
**DE-A-2 630 212**
**DE-A-2 647 152**
**DE-A-3 424 469**
**DE-U-8 221 054**
**FR-A-2 180 851**

(73) Patentinhaber: **ELPAG AG CHUR**
**Quaderstrasse 11**
**CH-7001 Chur (CH)**

(72) Erfinder: **Bleckmann, Ingo, Dipl.-Ing. Dr.**
**Ignaz-Rieder-Kai 11**
**A-5020 Salzburg (AT)**

(74) Vertreter: **Liedl, Gerhard**
**Steinsdorfstrasse 21 - 22**
**D-8000 München 22 (DE)**

Courier Press, Leamington Spa, England.

EP 0 228 000 B1

## Beschreibung

Die Erfindung betrifft einen elektrischen Durchlauferhitzer für Kaffeemaschinen, Geschirrspülmaschinen und ähnliche Geräte nach den Merkmalen des Oberbegriffes der Ansprüche 1 bzw. 2.

Aus der DE—U—8 221 054.3 ist ein elektrischer Durchlauferhitzer für Getränkebereiter bekannt, bei dem ein Rohrheizkörpermantelrohr integral mit einem Durchfließrohr für das zu erhitzende Medium verbunden ist. Die beiden Rohre werden also von einem Strangpreßprofil gebildet. Der kreisrunde Außenmantel des Durchflußrohres verläuft konzentrisch zum Innenmantel, wobei jedoch der Radius des Außenmantels in Richtung auf den Rohrheizkörperteil entsprechend zunimmt, so daß sich ein konvexer Übergang ergibt.

Aus der DE—A—2 630 212 ist ein Durchlauferhitzer für Kaffee maschinen bekannt, welcher aus einem Doppelrohr besteht. Der innenliegende, rohrförmige Aufnahmeraum enthält einen Rohrheizkörper. Der außenliegende Kanal weist eine im wesentlichen kreisrunde Innenwandung auf, während die Außenfläche sechseckig ausgebildet ist. Dadurch ergibt sich ein guter Wärmekontakt zu einer darauf angeordneten Warmhalteplatte.

Den bekannten Ausführungsformen sind folgende Nachteile gemeinsam:

Mindestens die Hälfte, jedoch nach Anordnung oftmals mehr, der vom Rohrheizkörper erzeugten Wärme fließt in den über der Mittellinie liegenden Bereich des Wasserdurchflußrohres. Da die Wärmeabgabe an den Dampf-Luftraum des Durchflußrohres, der z.B. bei einer Kaffeemaschine zumindest periodisch vorhanden ist, schlecht ist, ergibt sich damit eine erhöhte Abstrahlung nach außen mit entsprechendem Energieverlust. Bei Durchflußerhitzern, bei denen die im Durchflußrohr stehende Wassersäule betriebsbedingt über den Siedepunkt erhitzt werden muß, damit die zum Hochtreiben der Wassersäule in ein Steigrohr erforderlich Antriebsleistung gewährleistet wird, entsteht durch den angegebenen Wärmefluß eine stärkere Dampfbildung, die jedoch sich nicht oder nicht genügend hinsichtlich der erwähnten Vorschubkraft auswirkt. Der über der Wassersäule stehende Dampf tritt vielmehr unter unangenehmen schnorchelnden Geräuschen aus der Auslaßöffnung des Steigrohres aus. Es wird, wie sich dies an üblichen Kaffeemaschinen feststellen läßt, oftmals etwa ein Sechstel der eingefüllten Wassermenge unnötig verdampft. Da zur Aufheizung des Wassers auf die Siedetemperatur weniger elektrische Energie benötigt wird, als zur Verdampfung des siedenden Wassers führt dies zu einem nach heutigen Vorstellungen nicht mehr tragbaren unzulässig hohen Energieverbrauch.

Anzustreben ist dementsprechend eine Lösung, bei der der Wärmefluß vom Rohrheizkörper zum Wasserrohr verbessert und die vom Rohrheizkörper nach außen abgestrahlte Energie verringert wird und bei der der größere Teil der vom Rohrheizkörper an das Wasserrohr abgegebenen Wärmemenge von unten her auf die Wassersäule übertragen wird, so daß also die Dampfbildung am Boden des Wasserdurchlaufrohres in Form kleiner Blasen einsetzt, die einen entsprechenden Verschub im Sinne des Austriebes der Wassersäule aus dem Steigrohr liefern und ein schwallförmiger Dampfaustritt aus der über der Wasseroberfläche stehendem Dampfraum vermieden wird.

Der Erfindung liegt in diesem Sinne die Aufgabe zugrunde, einen Durchflußerhitzer der in Rede stehenden Art vorzuschlagen, bei welchem der Wärmefluß von dem Rohrheizkörper in den unteren Bereich des Wasserdurchlaufrohres verbessert und damit der Energieverbrauch verringert wird.

Die Lösung dieser Aufgabe ergibt sich aus den kennzeichnenden Merkmalen der unabhängigen Ansprüche 1 bzw. 2. Der abhängige Anspruch 3 beschreibt eine bevorzugte Ausführungsform.

Beispiele von Ausführungsformen des neuen elektrischen Durchlauferhitzers sind in der Zeichnung dargesellt.

Es zeigen:

Fig. 1 eine Ansicht eines Durchlauferhitzers für Kaffeemaschinen von unten;

Fig. 2 in vergrößertem Maßstab einen Schnitt einer ersten Ausführungsform des Durchlauferhitzers;

Fig. 3 ähnlich Fig. 2 einen Schnitt einer zweiten Ausführungsform.

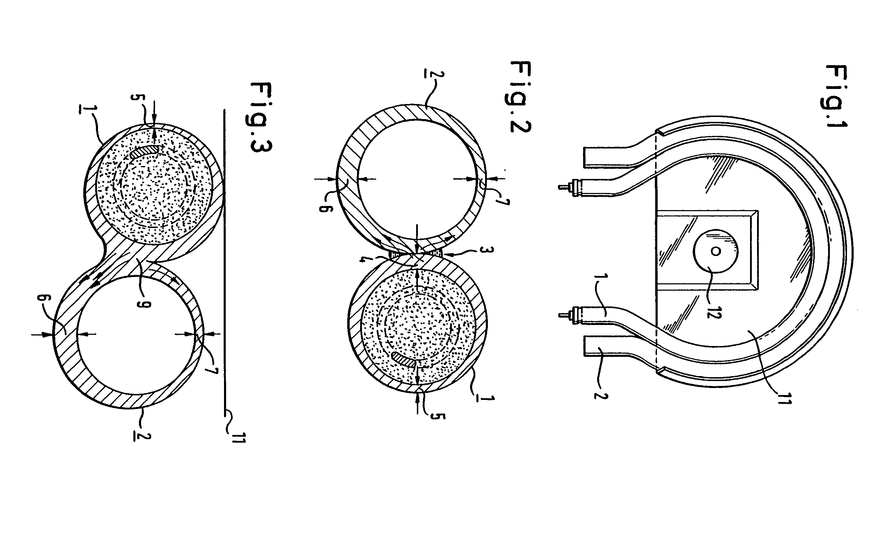

Das Mantelrohr 1 eines Rohrheizkörpers ist mit dem Durchflußrohr 2 an einer Verbindungsstelle 3 z.B. durch Löten verbunden, wie dies in Fig. 2 dargestellt ist. Das Rohrheizkörpermantelrohr 1 besitzt eine über den Umfang variierende Wandstärke und zwar in dem Sinne, daß es in der Nähe der Verbindungsstelle 3 die größte Wandstärke 4 und an der gegenüberliegenden Seite die geringste Wandstärke 5 aufweist. Obwohl also entsprechend der Darstellung der Außenmantel und der Innenmantel des Rohrheizkörper in etwa kreisförmig sind, liegen die Mittelpunkte der beiden Kreisflächen im Abstand voneinander in dem Sinne, daß der Mittelpunkt der Innenmantelkreisfläche einen größeren Abstand vom Durchflußrohr 2 hat als der Mittelpunkt der Außenmantelkreisfläche.

Es fließt eine größere Wärmemenge durch den eine größere Wandstärke aufweisenden Bereich des Rohrheizkörpermantelrohres 1 zu dem Durchflußrohr 2 als zu der dem Durchflußrohr 2 abgewendeten Seite des Rohrheizkörpermantelrohres 1, im Vergleich zu einer Ausführungsform mit konstanter Wandstärke des Rohrheizkörpermantelrohres.

Das Durchflußrohr 2 besitzt eine ähnliche Konfiguration, jedoch mit dem Unterschied, daß der Bereich 6 der größten Wandstärke an der tiefsten Stelle und der Bereich 7 der kleinsten Wandstärke an der höchsten Stelle liegt. Dadurch wird erreicht, daß der größere Teil der vom Rohrheizkörper 1 an das Wasserdurchflußrohr 2 abgegebenen Wärme in den unteren Bereich fließt und von diesem an die im Durchflußrohr 2 stehende Wassersäule abgegeben wird. Der Wärmefluß nach oben zu der dem kleinsten Durchmesser aufweisenden Stelle 7 wird dagegen verringert, so daß im Vergleich zu bekannten Ausführungsformen weniger Wärme an den Dampfraum abgegeben wird.

Gemäß der in Fig. 3 dargestellten Ausführungsform werden das Rohrheizkörpermantelrohr 1 und das Durchflußrohr 2 von einem einzigen Strangpreßprofil gebildet. Die integrale Verbindungsstelle 9 der beiden Rohre leitet den Wärmefluß aus dem die größte Wandstärke besitzendem Bereich des Rohrheizkörpermantelrohres in den die größte Wandstärke besitzenden unteren Bereich des Wasserdurchflußrohres 2.

Fig. 1 zeigt die Anordnung des Durchlauferhitzers an einer Abstellplatte 11, z.B. für eine Kaffeekanne, wobei ein Thermostat 12 die Temperaturregelung übernimmt.

Bei der in Fig. 3 dargestellten Ausführungsform ist der Rohrheizkörper 1 mit seiner Oberseite mit der Abstellplatte 11 verbunden, so daß die abgestellte Kaffeekanne und die aufgefangene Flüssigkeit warm gehalten werden. Das Durchlaßrohr 2 ist dagegen im Abstand von der Abstellplatte 11 gehalten. Damit wird einerseits ein guter Wärmefluß vom Rohrheizkörper 1 auf die Abstellplatte erreicht, während andererseits trotzdem sichergestellt ist, daß der größere Teil der vom Rohrheizkörper 1 abgegebenen Wärme in den unteren Bereich des Durchflußrohres 2 fließt. Bei deiser Ausführungsform liegt der Rohrheizkörper außen. Durch die konstruktiv bedingt größere Länge kann er mit einer höheren Heizleistung betrieben werden. Während des Wasserdurchlaufs regelt der Thermostat 12 die Wassertemperatur. Nach Beendigung des Durchlaufs oder bei Fehlbetrieb spricht bei fehlender Wassersäule der Thermostat auf die Rohrheizkörpertemperatur an.

Die Anordnung kann z.B. zur Verdichtung des Isoliermaterials in eine andere Form z.B. Dreieckform des Rohrheizkörpers und sich nach oben verjüngende Form des Durchlaufrohres umgepreßt werden. Besonders vorteilhaft ist ein tropfenförmiger Querschnitt. Vorteile werden bereits erzielt, wenn nur das Durchflußrohr oder nur der Rohrheizkörper mit variierender Wandstärke in dem angegebenen Sinn hergestellt werden.

Zur weiteren Verbesserung der Wärmeübertragung auf die Wassersäule im Durchflußrohr 2 kann an dem die größte Wandstärke besitzenden Bereich 6 des Durchflußrohres 2 ein nach innen abstehender Steg angesetzt sein.

Weiterhin kann an das Durchflußrohr 2 oder an das Rohrheizkörpermantelrohr 1 ein in sich ebener oder in sich gewölbter Blechstreifen angesetzt sein, der sich über einen Teil des Längsverlaufes oder über den gesamten Längsverlauf erstreckt. Dadurch kann wirkungsmäßig der Bereich der größeren Wandstärke noch verbessert oder simuliert werden.

## Patentansprüche

1. Elektrischer Durchlauferhitzer für Kaffeemaschinen, Geschirrspülmaschinen oder ähnliche Geräte, bei dem ein Rohrheizkörpermantelrohr (1) mit einem Durchflußrohr (2) für das zu erhitzende Medium verbunden ist und das Rohrheizkörpermantelrohr (1) und bzw. oder das Durchflußrohr (2) eine über seinen Umfang variierende Wandstärke besitzt, wobei der Außenmantel des Rohrheizkörpermantelrohres (1) und bzw. oder des Durchflußrohres (2) in etwa kreisförmig ist, dadurch gekennzeichnet, daß der Innenmantel der beiden Rohre (1, 2) ebenfalls kreisförmig, jedoch exzentrisch so versetzt ist, daß die Kreismittelpunkte des Außenrohres und des Innenrohres einen Abstand voneinander besitzen und daß der Bereich der größten Wandstärke beim Rohrheizkörpermantelrohr (1) dem Durchflußrohr (2) zugewendet ist.

2. Elektrischer Durchlauferhitzer für Kaffeemaschinen, Geschirrspülmaschinen oder ähnliche Geräte, bei dem ein Rohrheizkörpermantelrohr (1) mit einem Durchflußrohr (2) für das zu erhitzende Medium verbunden ist und das Rohrheizkörpermantelrohr (1) und bzw. oder das Durchflußrohr (2) eine über seinen Umfang variierende Wandstärke besitzt, wobei der Außenmantel des Rohrheizkörpermantelrohres (1) und bzw. oder des Durchflußrohres (2) in etwa kreisförmig ist, dadurch gekennzeichnet, daß der Innenmantel beider Rohre (1, 2) ebenfalls kreisförmig, jedoch exzentrisch so versetzt ist, daß die Kreismittelpunkte des Außenrohres und des Innenrohres einen Abstand voneinander besitzen und daß der Bereich der größten Wandstärke beim Durchflußrohr (2) an der im Einbausinne der Anordnung am tiefsten gelegenen Stelle gegenüber einer Abstellplatte liegt.

3. Elektrischer Durchlauferhitzer nach Anspruch 1 oder Anspruch 2, dadurch gekennzeichnet, daß der Rohrheizkörper (1) mit seiner Oberseite mit der Abstellplatte (11) verbunden ist, während das Durchflußrohr (2) im Abstand von der Abstellplatte (11) gehalten wird.

## Revendications

1. Chauffe-eau électrique à écoulement libre pour machines à préparer le café, lave-vaisselle ou appareils analogues, dans lequel un tube (1) formant gaine du corps de chauffe tubulaire est relié à un tube de circulation (2) pour le fluide à chauffer et le tube (1) formant gaine du corps de chauffe tubulaire et/ou le tube de circulation (2) présente une épaisseur de paroi variable sur sa périphérie, la surface extérieure du tube (1) formant gaine du corps de chauffe tubulaire et/ou du tube de circulation (2) étant sensiblement circulaire, caractérisé en ce que la surface intérieure des deux tubes (1, 2) est également circulaire mais décalée excentriquement de telle manière que les centres des surfaces extérieure et intérieure circulaires se trouvent à une certaine distance l'un de l'autre et que la région à plus forte épaisseur de paroi du tube (1) formant gaine du corps de chauffe tubulaire se trouve du côté du tube de circulation (2).

2. Chauffe-eau électrique à écoulement libre pour machines à préparer le café, lave-vaisselle ou appareils analogues, dans lequel un tube (1) formant gaine du corps de chauffe tubulaire est relié à un tube de circulation (2) pour le fluide à chauffer et le tube (1) formant gaine du corps de chauffe tubulaire et/ou le tube de circulation (2) présente une épaisseur de paroi qui varie sur sa périphérie, la surface extérieure du tube (1) formant gaine du corps de chauffe tubulaire et/ou du tube de circulation (2) étant sensiblement circulaire, caractérisé en ce que la surface intérieure des deux tubes (1, 2) est également circulaire, mais est décalée excentriquement de telle manière que les centres des surfaces extérieure et intérieure circulaires se trouvent à une certaine distance l'un de l'autre et que la région à plus forte épaisseur de paroi du tube de circulation (2) se trouve, du point de vue du montage de l'ensemble, à l'endroit le plus bas par rapport à une plaque de maintien à température.

3. Chauffe-eau électrique à écoulement libre selon la revendication 1 ou 2, caractérisé en ce que le tube (1) formant gaine du corps de chauffe tubulaire est relié au niveau de son côté supérieur à la plaque (11) de maintien à température, alors que le tube de circulation (2) est tenu à une certaine distance de la plaque 11 de maintien à température.

**Claims**

1. An electrical continuous flow heater for coffee making machines, dishwashing machines or similar appliances, in which a tubular heater jacket tube (1) is connected to a through-flow tube (2) for the medium to be heated, and the tubular heater jacket tube (1) and/or the through flow tube (2) is of a wall thickness which varies over its periphery, wherein the outside surface of the tubular heater jacket tube (1) and/or the through-flow tube (2) is substantially circular, characterised in that the inside surface of the two tubes (1, 2) is also circular but is disposed eccentrically in such a way that the centres of the circles of the outer tube and the inner tube are at a spacing from each other and that the region of the greatest wall thickness in respect of the tubular heater jacket tube (1) is towards the through-flow tube (2).

2. An electrical continuous flow heater for coffee making machines, dishwashing machines or similar appliances, in which a tubular heater jacket tube (1) is connected to a through-flow tube (2) for the medium to be heated, and the tubular heater jacket tube (1) and/or the through-flow tube (2) is of a wall thickness which varies over its periphery, wherein the outside surface of the tubular heater jacket tube (1) and/or the through-flow tube (2) is substantially circular, characterised in that the inside surface of both tubes (1, 2) is also circular but is disposed eccentrically in such a way that the centres of the circles of the outer tube and the inner tube are at a spacing from each other and that the region of the greatest wall thickness in respect of the through-flow tube (2) is at the location which is at the lowest in the direction of installation of the arrangement, opposite a support plate.

3. An electrical continuous flow heater according to claim 1 or claim 2 characterised in that the tubular heater (1) is connected with its top side to the support plate (11) while the through-flow tube (2) is held at a spacing from the support plate (11).

EP 0 228 000 B1

# Fig.1

# Fig.2

# Fig.3

1